# EUROPEAN PATENT APPLICATION

(11) **EP 4 811 165 A1**
(43) Date of publication of application: **23.09.2026**
(21) Application number: 25382265.4
(22) Date of filing: 20.03.2025
(51) Int. Cl.: G06F 16/3329, G06F 16/3332

(54) **COMPUTER IMPLEMENTED METHOD AND SYSTEM FOR AUTOMATED QUESTION COMPOSITION**

(71) Applicant: Empathy Systems Corporation, S.L.U., 33203 Gijón (ES)
(72) Inventor: MALDONADO ELVIRA, Ángel, 33203 Gijón (ES); AMORES CASTRO, Leticia, 33203 Gijón (ES)
(74) Representative: ZBM Patents - Zea, Barlocci & Markvardsen

(57) **Abstract**

A computer implemented method for automated question composition in response to an initial question is presented, wherein the question composition is performed using a Computer Embeddings Database comprising product item data sets of a catalog data set. Furthermore, the Database also comprises possible questions associated with each product item data set and keywords associated with the questions. The method involves querying the Computer Embeddings Database by sending keywords from an initial user question, and retrieving a question associated with the sent keyword from the Database, to be output to the user.

## Description

The present disclosure relates to methods and systems for automated question composition for use with catalogs of products.

### BACKGROUND

Different question generating systems exist, which use generative Language Models to obtain questions related to data or questions inputted by a user. However, such systems use large computational resources or must connect to powerful hardware infrastructure such as HPCs, Machine Learning Algorithms stored within public computer servers or other computing devices which depend on a high bandwidth connection. Furthermore, because the generative Language Models work statistically, one letter or word at a time, they can produce false information - for example, pieces of fictional news or, in academic texts, made-up citations - and they may present such false information (i.e., Al hallucinations) as a fact or related information to the user's question.

Therefore, there is a need for methods and systems which can generate questions about a specific data set, based on an input question of a user, which reduce the use of computational resources and decrease the generation of hallucination-related data.

### SUMMARY

In a first aspect, a computer implemented method for automated question composition in response to an initial question received from a user interface is presented. More precisely, the question composition is performed using a Computer Embeddings Database comprising:
- a plurality of product item data sets of a catalog data set;
- at least one possible question associated with each product item data set, wherein the at least one possible question is pre-generated by inputting the corresponding product item data set of the catalog data set in a Machine Learning Language Model, and querying the Machine Learning Language Model for a possible question regarding the product item data set; and
- at least one keyword associated with each possible question;

Furthermore, the computer implemented method comprises the steps of:
- Receiving a first question from a user interface;
- Extracting at least one keyword from the received first question;
- Querying the Computer Embeddings Database, the querying comprising:
   - sending the extracted at least one keyword to the Computer Embeddings Database; and
   - retrieving a question associated with the sent keyword from the Computer Embeddings Database, the question being based on a semantic context represented by the at least one sent keyword;
- Outputting the retrieved question by the user interface.

By using the above-described method, an automated question composition is achieved wherein the user is presented with a question which helps the user to narrow down his/her selection of product items of a catalog data set, and wherein the method ensures that the user receives non-hallucinatory questions related to the product items of the catalog data set through a user interface.

In the present method, a Computer Embeddings Database is used, the Database comprising product data sets of a catalog data set. A catalog data set is a list of data representing product items, and a product data set is a set of data related to a specific product of the catalog data set.

A catalog data set may be, for example, a catalog of a clothes shop. A product item data set of such catalog data set may be, for example, a set of data related to a white t-shirt (i.e., the product). The data set related to a t-shirt may be, for example, a phrase signaling "white t-shirt", its composition (e.g., cotton or other fibers), the size of the t-shirt (e.g., S, M, L), and/or the style of the t-shirt (e.g., loose or fit). The catalog data set may comprise several product item data sets, related to, in this example, different products from the clothes shop catalog.

Furthermore, in the present disclosure, the Computer Embeddings Database comprises at least one possible question associated with each product item data set. To generate each possible question or questions corresponding to a product data set, each product item data set of the catalog data set is used as an input of a Machine Learning Language Model (MLLM).

The MLLM may be prompted to generate said possible questions based on, for example, the kind of questions expected to be asked by a user. Examples of said kind of questions would be, for example:
- pre-purchase questions about, for example, features found within each product data set or pricing of the products;
- usage questions about, for example, how to use, maintain, or troubleshoot the product;
- post-purchase questions about, for example, warranty, returns, or support.

The MLLM may also or alternatively be prompted to generate possible questions relevant to the user based on its usage, on the purpose of a purchase, or on the preferences of the user. Such prompts may include, for example, "What questions might a customer ask about [Product Name of the product item]?" or "Generate common pre-purchase questions for a product with the following features: [Features List of a product item of the catalog data set, which may include data from the corresponding product item data set]."

The MLLM may be, for example, a Large Language Model, and is prompted before performing the method of the present disclosure. Therefore, the MLLM is prompted in an "offline" manner, and the questions are pre-generated and stored within the Computer Embeddings Database, in such a way that when the method for automated question composition is performed, no connection to an MLLM is performed to obtain the questions.

Furthermore, along with the pre-generated questions, at least one keyword associated with each possible question is also stored within the Computer Embeddings Database. The keyword associated with a possible question is a word having a semantic relationship or affinity to the pre-generated question, and is extracted literally from the product item data set corresponding to the pre-generated question associated with the keyword itself. Therefore, the keywords associated with each possible question are Fully Formatted Facts (FFT), i.e., keywords that literally exist within one or more product item data set. This way, it is ensured that the questions to be output to the user interface in response to a question from a user are non-hallucinatory questions.

Furthermore, the computer implemented method for automated question composition in response to an initial question received from a user interface comprises receiving a first question from a user interface. The user interface may be, for example, a GUI found on a website.

Then, at least one keyword is extracted from the received first question. The extraction of the keywords may be performed by identifying the most relevant and informative words that capture the main idea or intent of the question. This step can be performed using several different techniques, ranging from simple rule-based methods (which may be embodied in one or more data sets, without the use of a Machine Learning Algorithm) to advanced natural language processing (NLP) techniques (using, for example, an MLLM).

Once the keyword or keywords are extracted from the received question, a querying of the Computer Embeddings Database is performed. The querying comprises:
- sending the extracted at least one keyword to the Computer Embeddings Database; and
- retrieving a question associated with the sent keyword from the Computer Embeddings Database, the question being based on a semantic context represented by the at least one sent keyword;

The retrieving of the question associated with the sent keyword may be performed, for example, by calculating a parameter representative of the semantic similarity between the sent keyword and one or more questions stored within the Computer Embeddings Database. More specifically, in some examples, the retrieving of a question associated with the sent keyword comprises:
- calculating a similarity parameter between the sent extracted keyword and a plurality of keywords of the Computer Embeddings Database;
- selecting a keyword from the plurality of keywords, the selected keyword having the similarity parameter representing the most similarity with the sent extracted keyword; and
- retrieving a question associated with the selected keyword of the Computer Embeddings Database.

The similarity parameter may be obtained by performing, for example, a Semantic Vector Matching. This type of matching can involve, for example, performing a keyword expansion of the sent extracted keyword, resulting in an expanded keyword vector. Such expanded keyword vector may have weights associated with each of the keywords within, the weight being related to the semantic or context affinity of the expanded keyword with the original extracted keyword and its corresponding question.

Then, the expanded keyword vector can be compared with one or more of the keywords found within the Computer Embeddings Database, in order to retrieve the most appropriate question associated with the selected keyword.

Finally, the retrieved question is output by the user interface. Because of all of the above, the retrieved question delivered to the user via the user interface is a deterministic and non-generative question, and is related to one or more product items within the catalog data set. By performing such method, it is further avoided that the generated question delivered to the user is a hallucination and does not relate to at least one product item from the catalog data set.

Also, the performance of this method decreases the generation time of the questions delivered to the user, and does not need a connection to a further server comprising an LLM. The use of pre-generated questions pre-stored in the Computer Embeddings Database enhances the user experience of the user, delivering the user questions which can further help narrow down an answer to the initial question of the user.

In some examples, the retrieving of a question associated with the sent keyword further comprises retrieving a set of possible answers to the retrieved question, and wherein the method further comprises outputting the retrieved question and the retrieved set of possible answers through the user interface.

In some examples, the method may further comprise:
- receiving through the user interface a selection of one of the possible answers of the output set of possible answers
- retrieving a further question associated with the selected possible answer; and
- outputting the retrieved further question through the user interface.

In some examples, a possible answer comprises data from a product item data set from the Computer Embeddings Database.

Furthermore, in some examples, the possible answers are retrieved from the Computer Embeddings Database.

In another aspect, a computer program product is disclosed. The computer program product may comprise program instructions for causing a computing system to perform a method for automated question composition according to some examples disclosed herein.

The computer program product may be embodied on a storage medium (for example, a CD-ROM, a DVD, a USB drive, on a computer memory or on a read-only memory) or carried on a carrier signal (for example, on an electrical or optical carrier signal).

The computer program may be in the form of source code, object code, a code intermediate source and object code such as in partially compiled form, or in any other form suitable for use in the implementation of the processes. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

### BRIEF DESCRIPTION OF THE DRAWINGS

Non-limiting examples of the present disclosure will be described in the following, with reference to the appended drawings, in which:
Figure 1 depicts an example of a data processing system for performing a method for automated question composition according to the present disclosure.
Figure 2 depicts a diagram block representing an example of a method for automated question composition according to the present disclosure, performed by the system of figure 1.
Figure 3 depicts an example of a data processing system for performing a method for automated question composition according to the present disclosure.
Figure 4 depicts a diagram block representing an example of a method for automated question composition according to the present disclosure, performed by the system of figure 3.
Figure 5 is a block diagram of an example computing environment 500 including a data processing system or computing device 510 configured to implement aspects of computer-implemented methods and computer-executable program instructions or computer program or code according to the present disclosure.

### DETAILED DESCRIPTION OF EXAMPLES

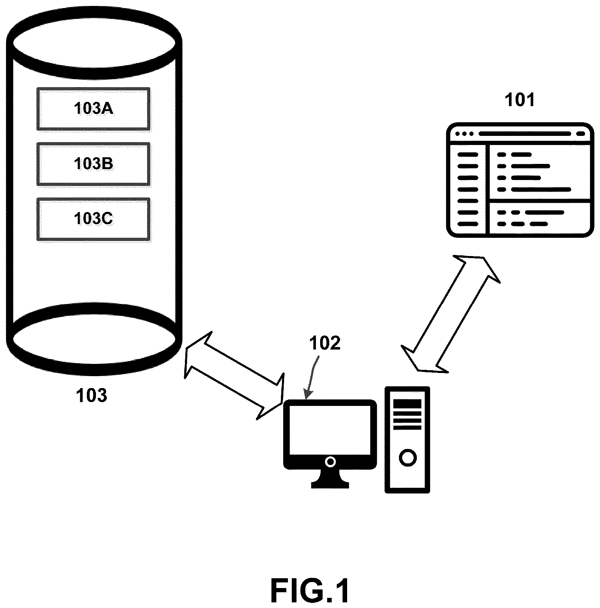

Figure 1 depicts an example of a system 100 for performing a method for automated question composition according to the present disclosure. The system 100 comprises a User interface 101 connected to a Computer Server 102. Furthermore, the system 100 also comprises a Computer Embeddings Database 103 further connected to the Computer Server 102.

In the present example, the Computer Embeddings Database 103 comprises:
- a plurality of product item data sets 103A of a catalog data set, the catalog data set being a ski equipment catalog, and the product item data sets being items of ski equipment and clothing, and their corresponding descriptions;
- three possible questions 103B associated with each product item data set, wherein the at least one possible question is pre-generated by inputting the corresponding product item data set of the ski equipment catalog in a Machine Learning Language Model, and querying the Machine Learning Language Model for a possible question regarding the product item data set; and
- twenty keywords 103C associated with each possible question;

Furthermore, the Computer Server 102 is configured to perform a method for automated question composition in response to an initial question received from a user interface, according to an example of the present disclosure. Furthermore, the question composition is performed using the Computer Embeddings Database 103.

Also, in this example, the User Interface 101 is a Computer Terminal 101, and is connected to the Computer Server 102 through an Internet connection.

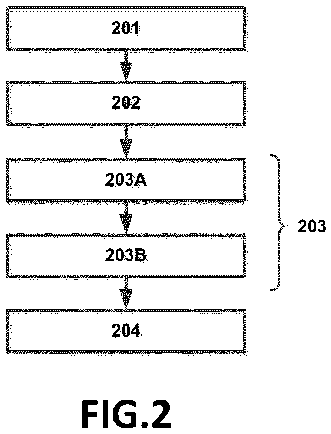

Figure 2 depicts a diagram block representing an example of a method for automated question composition according to the present disclosure. The method is performed by the Computer Server 102 of System 100 depicted in figure 1, and comprises the following steps:
In Step 201, a first question from the Computer Terminal 101 is received by the Computer Server 102.

In Step 202, a computer program installed within the Computer Server 102 extracts a set of ten keywords from the received first question, the extraction being performed, in this example, using a keyword expansion model. The keyword expansion model, in this example, performs a tokenization (splitting the question into individual words), a stemming of the tokenized words (i.e., converting the words into their root forms), a synonym expansion and a word embedding expansion. The keyword expansion model, in this example, does not use a machine learning model to perform any of the above-mentioned steps, but it could use a machine learning model to improve the results of said steps. This results in a vector with the set of ten keywords, the set of keywords comprising keywords which may be semantically related to the first question (and either found literally within the question or not).

In Step 203, the Computer Server 102 queries the Computer Embeddings Database 103, wherein the querying comprises:
- Step 203A: the Computer Server 102 sends the extracted set of ten keywords to the Computer Embeddings Database 103; and
- Step 203B: the Computer Server 102 retrieves a question associated with the sent set of ten keywords among the possible questions 103B, the question being retrieved from the Computer Embeddings Database 103. The retrieved question is based on a semantic context represented by the set of ten keywords previously sent.

In Step 204, the Computer Server 102 outputs the retrieved question by sending the retrieved question to the Computer Terminal 101, and the Computer Terminal 101 showing the retrieved question to the user on a screen.

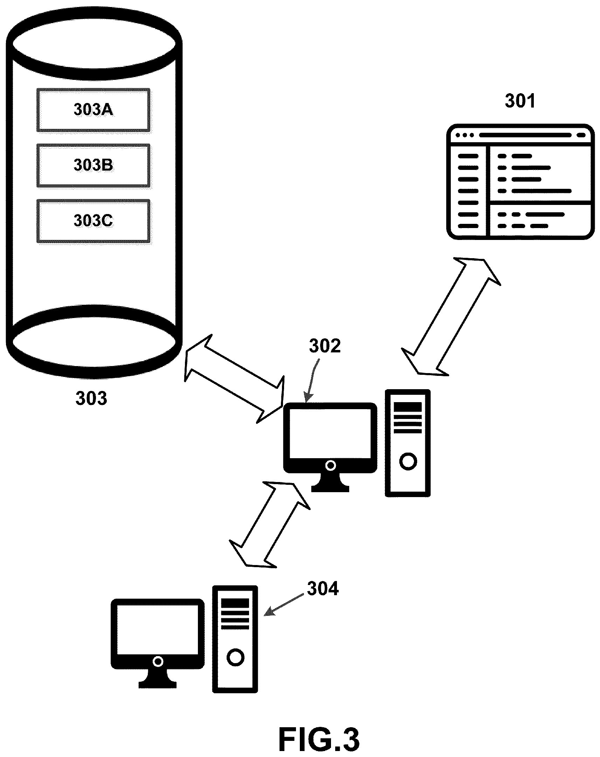

Figure 3 shows a further example of a system 300 for performing a method for automated question composition according to the present disclosure. In this example, the system 300 comprises a User interface 301 (in this example, also a Computer Terminal 301) connected to a Computer Server 302. Furthermore, the system 300 also comprises a Computer Embeddings Database 303 further connected to the Computer Server 302, and an LLM Computer Server 304 comprising an LLM algorithm, the LLM Computer Server 304 being further connected to the Computer Server 302.

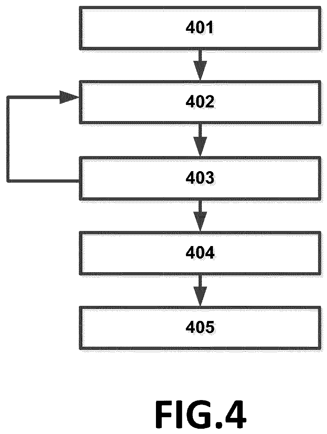

Figure 4 depicts a diagram block representing an example of a method for automated question composition according to the present disclosure. The method is performed by the controller of the Computer Server 302 of system 300 depicted in figure 3, and comprises the following steps:

In Step 401, Computer Server 302 selects a catalog data set from Computer Embeddings Database 303, the catalog data set being, in this example, a catalog of possible drinks of a cocktail bar, comprising data about thirty different drinks (i.e., thirty product item data sets, each for a drink of the cocktail bar). Furthermore, Computer Server 302 retrieves a first product item data set from the Computer Embeddings Database 303.

In Step 402, Computer Server 302 queries the LLM Computer Server 304, wherein the querying comprises sending the retrieved product item data set to the LLM Computer Server 304 and asking the LLM algorithm to return a set of five possible questions related to the retrieved product item data set.

In Step 403, Computer Server 302 receives a set of five questions generated by the LLM algorithm of the LLM Computer Server 304 and stores them within the Computer Embeddings Database 303. Furthermore, Computer Server 302 retrieves a subsequent product item data set from the Computer Embeddings Database 303, and the method returns to step 402, wherein the querying is performed with the newly retrieved product item data set, until a set of five possible questions has been generated for each of the product item data sets of the catalog data set.

In Step 404, Computer Server 302 selects, for each product item data set found within the Computer Embeddings Database 303, five keywords associated with each of the corresponding five possible questions. In this example, the selection of a keyword is made within the wording of each corresponding question. For example, a question being "Would you want a fizzy drink?", a keyword could be "fizzy", and the product item data set associated with said question could be the drink "Soda Cocktail", which could have one ingredient that is fizzy listed within its product item data set.

In Step 405, Computer Server 302 stores the keywords selected in Step 404 within the Computer Embeddings Database 303.

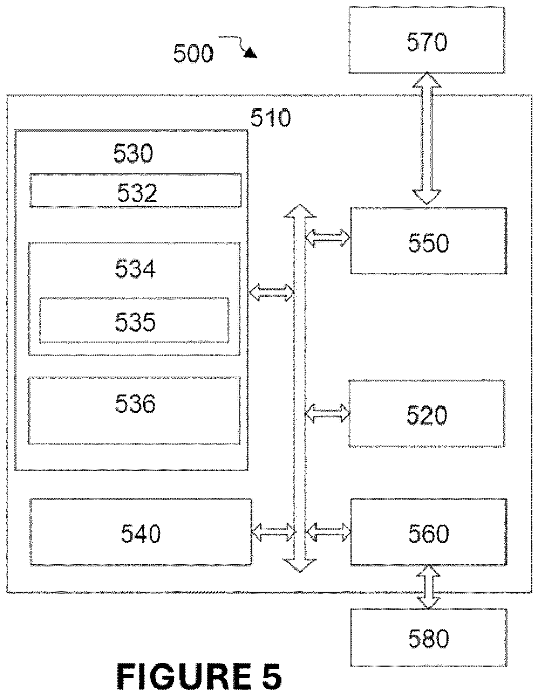

Figure 5 is a block diagram of an example computing environment 500 including a data processing system or computing device 510 configured to implement aspects of computer-implemented methods and computer-executable program instructions or computer program or code according to the present disclosure. For example, the computing device 510, or portions thereof, is configured to execute instructions to initiate, perform, or control one or more operations described with reference to any of the methods of the present disclosure. When the computer program is embodied in a signal that may be conveyed directly by a cable or other device or means, the carrier may be constituted by such cable or other device or means. Alternatively, the carrier may be an integrated circuit in which the computer program is embedded, the integrated circuit being adapted for performing, or for use in the performance of, the relevant methods.

The computing device 510 includes one or more processors 520. The processor(s) 520 are configured to communicate with system memory 530, one or more storage devices 540, one or more input/output interfaces 550, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which can include a basic input/output system for booting the computing device 510 as well as a full operating system to enable the computing device 510 to interact with users, other programs, and other devices. The system memory 530 stores program data 536 (e.g., system data). The system memory 530 includes one or more applications 534 (e.g., sets of instructions) executable by the processor(s) 520. As an example, the one or more applications 534 include instructions executable by the processor(s) 520 to operations described with reference to any of the methods of the present disclosure. In examples, the system memory 530 includes a non-transitory, computer readable medium storing instructions 535 that, when executed by the processor(s) 520, cause the processor(s) 520 to initiate, perform, or control operations to perform any of the methods of the present disclosure. The operations include any step as described in the various examples of the disclosure.

The one or more storage devices 540 include nonvolatile storage devices, such as magnetic disks, optical disks, or flash memory devices. In a particular example, the storage devices 540 include both removable and non-removable memory devices. The storage devices 540 are configured to store an operating system, images of operating systems, applications (e.g., one or more of the applications 534), and program data (e.g., the program data 536). In examples, the system memory 530, the storage devices 540, or both, include tangible (i.e., non-transitory) computer-readable media. In examples, one or more of the storage devices 540 are external to the computing device 510.

The one or more input/output interfaces 550 enable the computing device 510 to communicate with one or more input/output devices 570 to facilitate user interaction. For example, the one or more input/output interfaces 550 can include a display interface, an input interface, or both. For example, the input/output interface 550 is adapted to receive responses from RFID tags or feedback from the ML module implementing a ML model. In some implementations, the input/output interface 570 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces. In some implementations, the input/output device 570 includes one or more user interface devices and displays, including some combination of buttons, keyboards, pointing devices, displays, speakers, microphones, touch screens, and other devices.

The processor(s) 520 are configured to communicate with devices or controllers 580 via the one or more communications interfaces 560. For example, the one or more communications interfaces 560 can include a network interface. The devices or controllers 580 can include, for example, devices that measure data associated with responses from RFID tags or associated with feedback from the ML module implementing a ML model , network devices, client devices, servers, cloud-based devices, one or more other devices, or any combination thereof.

In some implementations, a non-transitory, computer readable medium stores instructions that, when executed by one or more processors, cause the one or more processors to initiate, perform, or control operations to perform part or all of the functionality described above. For example, the instructions can be executable to implement one or more of the operations or methods of the disclosure. In some implementations, part or all of one or more of the operations or methods of the disclosure can be implemented by one or more processors (e.g., one or more central processing units (CPUs), one or more graphics processing units (GPUs), one or more digital signal processors (DSPs), one or more field-programmable gate arrays (FPGAs), or one or more application-specific integrated circuits (ASICs)) executing instructions, by dedicated hardware circuitry, or any combination thereof.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

Further, although the examples described with reference to the drawings comprise computing apparatus/systems and processes performed in computing apparatus/systems, the invention also extends to computer programs, particularly computer programs on or in a carrier, adapted for putting the system into practice.

## Claims

1. A computer implemented method for automated question composition in response to an initial question received from a user interface, the question composition being performed using a Computer Embeddings Database comprising:
- a plurality of product item data sets of a catalog data set;
- at least one possible question associated with each product item data set, wherein the at least one possible question is pre-generated by inputting the corresponding product item data set of the catalog data set in a Machine Learning Language Model, and querying the Machine Learning Language Model for a possible question regarding the product item data set; and
- at least one keyword associated with each possible question;
the method comprising the steps of:
- Receiving a first question from a user interface;
- Extracting at least one keyword from the received first question;
- Querying the Computer Embeddings Database, the querying comprising:
i. sending the extracted at least one keyword to the Computer Embeddings Database; and
ii. retrieving a question associated with the sent keyword from the Computer Embeddings Database, the question being based on a semantic context represented by the at least one sent keyword;
- Outputting the retrieved question by the user interface.

2. A method according to claim 1, wherein the retrieving of a question associated with the sent keyword comprises:
- calculating a similarity parameter between the sent extracted keyword and a plurality of keywords of the Computer Embeddings Database;
- selecting a keyword from the plurality of keywords, the selected keyword having the similarity parameter representing the most similarity with the sent extracted keyword; and
- retrieving a question associated with the selected keyword of the Computer Embeddings Database.

3. A method according to claim 1 or 2, wherein the retrieving of a question associated with the sent keyword further comprises retrieving a set of possible answers to the retrieved question, and wherein the method further comprises outputting the retrieved question and the retrieved set of possible answers through the user interface.

4. A method according to claim 3, further comprising:
- receiving through the user interface a selection of one of the possible answers of the output set of possible answers
- retrieving a further question associated with the selected possible answer; and
- outputting the retrieved further question through the user interface.

5. A method according to any of claims 3 or 4, wherein a possible answer comprises data from a product item data set from the Computer Embeddings Database.

6. A method according to any of claims 3 to 5, wherein the possible answers are retrieved from the Computer Embeddings Database.

7. A data processing system comprising means for carrying out the steps of the method of any of claims 1 to 6.

8. A computer program product comprising program instructions for causing a computing system to perform a method according to any of claims 1 to 6.

9. A computer program product according to claim 8, embodied on a storage medium.

10. A computer program product according to claim 8, carried on a carrier signal.
